# EUROPEAN PATENT APPLICATION

(11) **EP 4 509 900 A1**
(43) Date of publication of application: **19.02.2025**
(21) Application number: 24190898.7
(22) Date of filing: 25.07.2024
(51) Int. Cl.: G02B 27/00, G02C 7/10, G02C 11/00

(54) **ADAPTIVE ADJUSTMENT IN OPTICAL APPARATUS ACCORDING TO EYE STATE**

(30) Priority: 15.08.2023 US 202318449802
(71) Applicant: Pixieray Oy, 02630 Espoo (FI)
(72) Inventor: Konttila, Antti, 90800 Oulu (FI)
(74) Representative: Moosedog Oy

(57) **Abstract**

Disclosed is an optical apparatus (100, 200) comprising: an optical element (102, 202A-B, 302) per eye (104); light-control element(s) (106A-B) per eye, arranged on side(s) of the optical element, wherein when activated, the light-control element(s) allows light of at least one type to pass therethrough; an eye-tracking means (108, 204); and processor(s) (110, 206) configured to: process eye-tracking data, collected by the eye-tracking means, to determine a state of a user's eyes; and control the light-control element(s) to adjust an amount of ambient light (112) passing through the optical element towards the user's eyes, based on the state of the user's eyes.

## Description

### TECHNICAL FIELD

The present disclosure relates to optical apparatuses incorporating adaptive adjustment according to eye state. Moreover, the present disclosure relates to methods for incorporating adaptive adjustment in optical apparatuses according to eye state.

### BACKGROUND

Nowadays, adaptive lenses are increasingly being used in eyewear apparatuses for improving a user's experience. Based on any eye condition of the user, the user's eyes may become sensitive to light, wherein the eye condition could be a result of prolonged exposure of the user's eyes to ambient light. Furthermore, such prolonged exposure can cause discomfort, visual disturbances, eye strain, headaches, and similar.

Presently, conventional optical apparatuses that are see-through allow the ambient light in a surrounding of the user to be incident upon the user's eyes. When the user's eyes are closed, and there is the prolonged exposure of the user's eyes to ambient light, it adversely affects a sleeping/eye-resting experience of the user. Furthermore, the conventional optical apparatuses include provisions for functionalities only when the user is conscious.

Therefore, in light of the foregoing discussion, there exists a need to overcome the aforementioned drawbacks.

### SUM MARY

The aim of the present disclosure is to provide an optical apparatus incorporating an adaptive adjustment according to an eye state and a method for incorporating an adaptive adjustment in optical apparatuses according to an eye state. The aim of the present disclosure is achieved by optical apparatuses and methods as defined in the appended independent claims to which reference is made to. Advantageous features are set out in the appended dependent claims.

Throughout the description and claims of this specification, the words "*comprise*", "*include*", "*have*", and "*contain*" and variations of these words, for example "*comprising*" and "*comprises*", mean "*including but not limited to*", and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIGs. 1A and 1B illustrate block diagrams of an optical apparatus incorporating an adaptive adjustment according to an eye state, according to an embodiment of the present disclosure;
FIG. 2 illustrates a schematic diagram of an optical apparatus incorporating an adaptive adjustment according to an eye state, in accordance with an embodiment of the present disclosure;
FIGs. 3A and 3B show schematic illustrations of implementations of at least one light-control element of an optical apparatus, in accordance with different embodiments of the present disclosure; and
FIG. 4 illustrates a flowchart illustrating steps of a method incorporating an adaptive adjustment in an optical apparatus according to an eye state, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides an optical apparatus comprising:
an optical element per eye;
at least one light-control element per eye, arranged on at least one side of the optical element, wherein when activated, the at least one light-control element allows light of at least one type to pass therethrough;
an eye-tracking means; and
at least one processor configured to:
   process eye-tracking data, collected by the eye-tracking means, to determine a state of a user's eyes; and
   control the at least one light-control element to adjust an amount of ambient light passing through the optical element towards the user's eyes, based on the state of the user's eyes.

In the aforementioned optical apparatus incorporating adaptive adjustment of the at least one light-control element according to the state of the user's eyes, the eye-tracking means performs eye-tracking, wherein the state of the user's eyes is determined based on said eye-tracking. Subsequently, the at least one light-control element is controlled per eye to allow only a certain amount of the ambient light to pass towards the user's eyes, based on the state of the user's eyes. A synergistic effect of the aforementioned features is that the user's experience is optimized for the current state of the user's eyes. In an instance, when the user's eyes are in a closed state, the user's sleeping and/or eye-resting, the user's experience is optimized by controlling the at least one light-control element in such a manner, that a passage of the ambient light onto the user's eyes is restricted. In another instance, when the user's eyes are in an open state, the user's viewing experience is optimized by controlling the at least one light-control element in such a manner, that a passage of the ambient light is allowed onto the user's eyes. Beneficially, the optical apparatus enables the user to control the amount of ambient light passing towards the user's eyes by voluntarily (and/or involuntarily) changing the state of the user's eyes. Beneficially, the optical element can easily be implemented in various types of optical apparatuses, for example, such as a pair of glasses, a pair of sunglasses, smart glasses, a head-mounted display, or similar.

In a second aspect, the present disclosure provides a method implemented by an optical apparatus comprising an optical element per eye, at least one light-control element per eye, arranged on at least one side of the optical element, an eye-tracking means, and at least one processor, wherein the method comprises:
processing eye-tracking data, collected by the eye-tracking means, to determine a state of a user's eyes; and
controlling the at least one light-control element to adjust an amount of ambient light passing through the optical element towards the user's eyes, based on the state of the user's eyes, wherein the at least one light-control element allows light of at least one type to pass therethrough.

In the aforementioned method incorporating adaptive adjustment of the at least one light-control element according to the state of the user's eyes, eye-tracking of the user's eyes is performed, wherein the state of the user's eyes is determined based on said eye-tracking. Subsequently, only a certain amount of the ambient light passes towards the user's eyes, based on the state of the user's eyes. A synergistic effect of the aforementioned processing steps is that the user's experience is optimized for any state of the user's eyes. In an instance, when the user's eyes are in a closed state, the user's sleeping and/or eye-resting, the user's experience is optimized by restricting a passage of the ambient light onto the user's eyes. In another instance, when the user's eyes are in an open state, the user's viewing experience is optimized by allowing passage of the ambient light onto the user's eyes. Beneficially, the aforementioned method enables the user to control the amount of ambient light passing towards the user's eyes by voluntarily (and/or involuntarily) changing the state of the user's eyes. The method described herein is simple, robust, fast, reliable, and easy to implement.

Throughout the present disclosure, the term "*optical apparatus*" refers to an apparatus that is to be worn over the eyes of the user. Examples of such an optical apparatus include, but are not limited to, a pair of glasses, a pair of sunglasses, smart glasses, and a head-mounted display.

Throughout the present disclosure, the term "*optical element*" refers to an element of the optical apparatus through which light passes to reach the user's eyes. Optionally, the optical element is implemented as any one of: an active optical element, a passive optical element. Herein, the term "*active optical element*" refers to an optical element whose optical power can be changed. In other words, the optical power of the optical element is (actively) adjustable. In this regard, the optical element is (optionally, electrically) controlled to produce different optical power(s) for each eye. Moreover, the term "*passive optical element*" refers to an optical element whose optical power cannot be changed. In other words, the optical power of the optical element is fixed (i.e., non-adjustable or static).

Throughout the present disclosure, the term "*light-control element*" refers to a component that is used to control at least one optical property of the light passing through the light control element, when the optical apparatus is in use. Herein, the at least one optical property may include, but is not limited to, an intensity, an optical transmission, a polarization, a direction, a colour, of the light. The term "*light*" refers to visible light. Moreover, the at least one type of the light could be at least one of: a polarized light, a coloured light. The at least one light-control element is arranged on an optical path of the light passing through the optical element towards the eye. The at least one light-control element could be in contact with the optical element, could be implemented as a layer of the optical element, could be arranged as at least one separate element in front of and/or behind the optical element, or similar. Furthermore, for each eye, the at least one light-control element could be stacked on same side of the optical element, or could be arranged on different sides of the optical element.

Optionally, the at least one light-control element is implemented as at least a first polarizer and a second polarizer. Herein, the term "*polarizer*" refers to an optical filter that allows light of a particular polarization orientation to pass through while blocking light of other polarization orientations. A technical effect of implementing the at least one light-control element as a given polarizer (namely, the first polarizer and/or the second polarizer) is that the given polarizer can be selectively activated to transmit light of a particular polarization orientation to pass therethrough, based on the state (as described below) of the user's eyes. Herein, the term "*state*" of the user's eyes refers to the extent of the closure of the user's eyes. This has been discussed in detail below. This beneficially improves the user's experience. It will be appreciated that the first polarizer and the second polarizer work in conjunction with each other. Optionally, the first polarizer is any one of: a horizontal polarizer, a vertical polarizer, and wherein the second polarizer is another one of: the vertical polarizer, the horizontal polarizer. The horizontal polarizer allows light of a horizontal polarization orientation to pass therethrough, whereas the vertical polarizer allows light of a vertical polarization orientation to pass therethrough. Optionally, the first polarizer and the second polarizer are arranged on different sides of the optical element. Alternatively, the first polarizer and the second polarizer are arranged on a same side of the optical element.

In an instance, both the first polarizer and the second polarizer could be activated to allow no light to pass therethrough towards the user's eyes. In another instance, any one of the first polarizer and the second polarizer, preferably the given polarizer implementing the horizontal polarizer, could be activated if the user is awake in a bright environment (for example, such as, during day). In yet another instance, none of the first polarizer and the second polarizer is activated when the user is awake in a dark environment (for example, such as, during night). As an example, the first polarizer and the second polarizer may be the horizontal polarizer and the vertical polarizer, respectively. When both of the first polarizer and the second polarizer are activated, they would allow almost no light to pass therethrough. Alternatively, when only the first polarizer is activated, said first polarizer may reduce a glare of a horizontal polarization orientation (which may arise due to sun rays).

Optionally, the at least one light-control element is implemented as an electrochromic element. Herein, the term "*electrochromic element*" refers to a component that changes colour and/or the at least one optical property of the light when an electric signal (i.e., current signal) is applied to the electrochromic element. An electrochromic element can be implemented by applying one or more conductive coating on an optical element. In such a case, when the electrochromic element is activated by applying electricity, metal ions within the conductive coating get ionised; as a result, the metal ions get attracted towards one surface of the coating, building up at said surface. This provides a shading effect, for example, within a double or triple glazed unit. When the optical element is implemented as the active optical element, the colour of the optical element can be electrochemically switched between different colours, wherein the colour ranges from no colour to any colour in a visible spectrum. Furthermore, electrochromic element could be implanted in the optical element in various colours. Herein, the term "*implanting*" refers to inserting or embedding the electrochromic element into the optical element. A technical effect of implementing the at least one light-control element as the electrochromic element is that the amount of light entering the user's eyes through the optical element can be dynamically controlled by changing an opacity or a tint of the electrochromic element, based on the state of the user's eyes.

Throughout the present disclosure, the term "*eye-tracking means*" refers to a specialised equipment that is employed to detect an extent of closure of the eye. Such eye-tracking is performed when the optical apparatus, in operation, is worn by the user. Optionally, the eye-tracking means is further employed to detect and/or follow a gaze direction of the user of the optical apparatus. Optionally, the eye-tracking means is implemented by way of at least one of: contact lenses having sensors, cameras monitoring features of the eyes, sensors arranged on a frame of the optical apparatus. Such features may comprise at least one of: a shape of a pupil of each eye, a size of the pupil, corneal reflections of light emanating from a real-world environment from a surface of each eye, a relative position of the pupil with respect to the corneal reflections, a relative position of the pupil with respect to corners of each eye. Such eye-tracking means are well-known in the art. The eye-tracking means is configured to collect the eye-tracking data and send the eye-tracking data to the at least one processor. It will be appreciated that the eye-tracking data is collected repeatedly by the eye-tracking means throughout an operation of the optical apparatus, as the extent of closure of each eye of the user keeps changing whilst she/he uses the optical apparatus and/or as gaze of the user's eyes keeps changing whilst she/he uses the optical apparatus. An up-to-date eye-tracking data allows for adaptively controlling the at least one light-control element of the optical apparatus in an accurate manner, for effectively controlling an amount of light passing through the optical element towards the user's eyes. In an instance, when the eye-tracking means is implemented as the camera, the eye-tracking data is in form of images of the user's eyes. In another instance, when the eye-tracking means is implemented by way of contact lenses having sensors, the eye-tracking data is the sensor data collected from the sensors.

It will be appreciated that the at least one processor is communicably coupled to the at least one light-control element and the eye-tracking means. Optionally, when the optical element is implemented as the active optical element, the at least one processor is communicably coupled to the active optical element. The at least one processor could be implemented as any one of: a microprocessor, a microcontroller, or a controller. As an example, the at least one processor could be implemented as an application-specific integrated circuit (ASIC) chip or a reduced instruction set computer (RISC) chip.

When processing the eye-tracking data, the at least one processor is configured to employ at least one of: an image processing algorithm, a feature extraction algorithm, a data processing algorithm. Other suitable algorithm(s) can also be employed, depending on a type of the eye-tracking data. A technical effect of processing the eye-tracking data to determine the state of the user's eyes is that the change in the at least one optical property of the at least one light-control element is initiated in a timely manner, thereby allowing for implementation of controlling the amount of light passing through the optical element.

Optionally, when processing the eye-tracking data, the at least one processor is configured to:
identify at least one indicator of the state of the user's eyes, wherein the at least one indicator comprises at least one of: an extent of visibility of pupils of the user's eyes, a position of the user's eyelids with respect to corners of a user's eyes, a velocity with which the user's gaze is moving, an acceleration with which the user's gaze is moving, a time period since a last blink of the user's eyes; and
determine the state of the user's eyes, based on the at least one indicator.

A technical effect of processing the eye-tracking data in such a manner is that the state of the user's eyes is accurately determined by considering various possible factors that could affect the state of the user's eyes. In this regard, when determining the extent of visibility of the pupils of the user's eyes, the at least one processor is configured to process the eye-tracking data by applying processing algorithms to detect and track a position and a size of the pupils over a period of time. Herein, when the eye-tracking data is in the form of images, image processing algorithms are applied to detect and track the position and the size of the pupils. Such image processing algorithms are well-known in the art. In this regard, the extent of visibility of the pupils may be detected when certain features (for example, such as portions of corneas lying above pupils) of the user's eyes, start to become invisible (for example, be only partially visible) in the images of the user's eyes. Alternatively, when the eye-tracking data is the sensor data, data processing algorithms are applied to detect and track the position and the size of the pupils. Herein, the sensor data comprises values that are related to and are indicative of visibility of the pupils of the user's eyes. Such data processing algorithms are well-known in the art. Herein, the at least one processor is configured to determine whether the pupil is any one of: fully visible, partially visible, not visible, in the images.

When determining the position of the user's eyelids, the at least one processor is configured to monitor a movement of the user's eyelids over the period of time by processing the eye-tracking data. Herein, when the eye-tracking data at least one another image, another image processing algorithms are applied to monitor the movement of the user's eyelids. In this regard, the at least one processor analyses a relative position of the eyelids with respect to the corners of the user's eyes that have been located. Alternatively, when the eye-tracking data is the another sensor data, another data processing algorithms are applied to monitor the movement of the user's eyelids. Herein, the another sensor data comprises values that are related to and indicative of locations (for example, such as, coordinates) of the corners of the user's eyes, and the relative position of the eyelids with respect to said locations of the corners of the user's eyes. Herein, the at least one processor is configured to determine whether the eyelids are any one of: open, partially-open, fully-closed, from the images.

Furthermore, the term "*velocity*" refers to an angular velocity with which the user's gaze is changing, whereas the term "acceleration" refers to an angular acceleration with which the user's gaze is changing. Information pertaining to the gaze direction and how it is obtained by the at least one processor has already been discussed earlier in detail.

Optionally, when determining the velocity, the at least one processor is configured to determine a rate of change of the gaze direction of the user's eyes (namely, a rate of change of gaze positions) within a given time period. In this regard, the at least one processor is configured to determine a distance between two consecutive gaze positions (for example, such as an initial gaze position at a first time instant and a final gaze position at a second time instant), and then divide said distance by a difference between the time instants of determining the two consecutive gaze positions, in order to obtain the velocity in a particular direction. Optionally, when determining the acceleration, the at least one processor is configured to determine a rate of change of velocity within the given time period. In this regard, the at least one processor is configured to determine a difference between two consecutive gaze velocities (for example, such as an initial gaze velocity at a first time instant and a final gaze velocity at a second time instant), and then divide said difference by a difference between the time instants of determining the two consecutive gaze velocities, in order to obtain the acceleration in a particular direction. The velocity and the acceleration with which the user's gaze is moving are used to determine how fast the user's gaze is changing. Optionally, the given time period lies in a range of 200 milliseconds to 2000 milliseconds. It will be appreciated that since the user's eyes may keep on changing continuously within the given time period, the at least one processor would also determine the velocity and/or the acceleration continuously. Determination of the velocity and/or the acceleration with which the user's gaze moves is well-known in the art.

Optionally, when determining the time period since the last blink of the user's eyes, the at least one processor is configured to analyse the aforementioned extent of visibility of the user's eyes and a movement of the eyelid, that signify the blink. In this regard, the at least one processor is configured to compare a current time with a time instant of the last eye blink, and subtracting said time instant from the current time, in order to obtain the time period of the last eye blink. This could indicate that the state of the user's eyes has remained unchanged over the time period.

Throughout the present disclosure, the state of the user's eyes can be any one of: a fully-closed state, a partially-closed state (namely, a partially-open state), an open state (namely, a fully-open state). The state of the user's eyes is determined to be the fully-closed state, when at least one of the following is true: the pupils of the user's eyes are invisible, the user's gaze is not moving, the user's eyelids are positioned to fully-occlude the user's eyes, the time period since the last blink of the user's eyes is greater than a predefined time period (as will be described later). The state of the user's eyes is determined to be the partially-closed state, when at least one of the following is true: the pupils of the user's eyes are partially-visible, the movement of the user's gaze is nil or random, the user's eyelids are positioned to partially-occlude the user's eyes. The state of the user's eyes is determined to be the open state, when at least one of the following is true: the pupils of the user's eyes are fully-visible, the movement of the user's gaze corresponds to saccades, smooth pursuit, or fixations, the user's eyelids are positioned to allow full visibility of the user's eyes, the time period since the last blink of the user's eyes is equal to or lesser than a predefined time period (as will be described later).

The at least one processor is configured to generate a drive signal to control the at least one light-control element, based on the state of the user's eyes. It will be appreciated that drive signals for the optical element for each eye of the user may be different. The drive signal could be a voltage signal and/or a current signal. The at least one light-control element is adjusted in such a manner that the amount of the ambient light decreases as the extent of closure of the user's eyes increases, and vice-versa. Herein, the term "*ambient light*" refers to a natural light (for example, such as sunlight) and/or a pre-existing lighting (in the surroundings of the user) that is entering the user's eyes through the optical element. In an instance, when the user's eyes are in the fully-closed state, the at least one light-control element is controlled to gradually decrease the amount of ambient light passing through the optical element and diminish it completely. In another instance, when the user's eyes are in the partially-closed state, the at least one light-control element is controlled to gradually decrease or increase the amount of ambient light passing through the optical element, based on whether the user's eyes will be in the fully-closed state or in the open state. In yet another instance, when the user's eyes are in the open state, the at least one light-control element is controlled to gradually increase the amount of the ambient light and allow maximum light to pass through the optical element.

In an embodiment, the at least one processor is configured to:
detect when the state of the user's eyes has been the partially-closed state or the fully-closed state since at least a predefined detection time period; and
when it is detected that the state of the user's eyes has been the partially-closed state or the fully-closed state since at least the predefined detection time period, control the at least one light-control element to decrease the amount of the ambient light passing through the optical element towards the user's eyes.

A technical benefit is that the experience of the user is improved when the user may be sleeping and/or relaxing when using the optical apparatus. In this regard, when the optical apparatus is in use, the at least one processor is configured to monitor the state of the user's eyes over the predefined detection time period. The predefined detection time period could be initiated from a time instant when the user's eyes are detected to be in the partially-closed state or the fully-closed state. Herein, the term "*predefined detection time period*" refers to a time period during which the user's eyes were detected to be continuously in the partially-closed state or the fully-closed state. Herein, the predefined detection time period could lie in a range of 30 seconds to 300 seconds. In order to confirm whether the user's eyes continues to remain in the partially-closed state or the fully-closed state, the at least one processor is optionally configured to continuously update the state of the user's eyes since at least the predefined detection time period. It will be appreciated that the partially-closed state or the fully-closed state is detected as some users sleep with their eyes only partially-closed, or fully-closed. When some users sleep with their eyes partially-closed, the user's eyes are almost closed. A technical benefit of detecting the state of the user's eyes for the predefined detection time period is to confirm whether the user is sleeping/resting or not. The amount of the ambient light is controlled to beneficially provide uninterrupted sleep/rest to the user.

Consequently, when it is confirmed that the user is sleeping, the drive signal is generated by the at least one processor and sent to the optical element of each eye. Such drive signals can be generated automatically by the at least one processor upon detection of the state of the eye, or be generated manually after receiving an input from the user before closing their eyes (for example, such as for sleeping, for taking a nap, and the like). Herein, the drive signal is generated in such a manner that a light-blocking strength of the at least one light-control element decreases with a decrease in the extent of closure of the user's eyes. A relationship between the light-blocking strength of the at least one light-control element and the extent of closure of the user's eyes could be given by a function (for example, such as a non-linear function like a portion of a bell curve (for example, such as a half of a bell curve), a step function having three steps corresponding to the open state, the partially-closed state, and the fully-closed state, and similar functions). Optionally, the at least one light-control element is controlled according to said function.

Optionally, the amount of the ambient light passing through the optical element towards the user's eyes is decreased over a predefined time period. A technical effect of decreasing the amount of the ambient light over the predefined time period is to allow the user's eyes to adapt to the change in the amount of light. The predefined time period could lie in a range of 0.5 second to 3 seconds. In this regard, the at least one processor generates the drive signal and sends said drive signal to the at least one light-control element to control the amount of the ambient light passing through the optical element. In an instance, when the at least one light-control element is implemented as the electrochromic element, the drive signal creates an electric field within the electrochromic element causing an electrochemical reaction. This electrochemical reaction alters the optical properties of the optical element, thereby resulting in a change in colour or transparency of the optical element. Herein, the electrochromic element could change from a lighter colour to a darker colour, or the electrochromic element could change from the transparent state to the opaque state.

In another embodiment, the at least one processor is configured to:
detect when the state of the user's eyes has changed to the open state after being closed for more than the predefined detection time period; and
when it is detected that the state of the user's eyes has changed to the open state after being closed for more than the predefined detection time period, control the at least one light-control element to increase the amount of the ambient light passing through the optical element towards the user's eyes.

In this regard, when the optical apparatus is in use, the at least one processor is configured to monitor the state of the user's eyes even after the amount of light has been decreased upon activation of a particular operational mode. This allows for detecting when the user's eyes are open again, after being closed for more than the predefined detection time period, and to accordingly increase the amount of the ambient light passing through the optical element, thereby restoring the amount of the ambient light to normal.

Optionally, the amount of the ambient light passing through the optical element towards the user's eyes is increased over another predefined time period. A technical effect of increasing the amount of the ambient light over the another predefined time period is to allow the user's eyes to adapt to the change in the amount of light. The another predefined time period lies in a range of 0.5 seconds to 3 seconds. In this regard, the at least one processor generates the drive signal and sends said drive signal to the at least one light-control element to control the amount of the ambient light passing through the optical element. In an instance, when the at least one light-control element is implemented as the electrochromic element, the drive signal creates an electric field within the electrochromic element causing another electrochemical reaction. This another electrochemical reaction alters the optical properties of the optical element, thereby resulting in a change in colour or transparency of the optical element. Herein, the electrochromic element could change from a darker colour to a lighter colour, or the electrochromic element could change from the opaque state to the transparent state.

Optionally, the optical apparatus further comprises:
a frame employed to hold the optical element per eye; and
at least one input means, mounted on the frame, that is to be used by the user for activating or deactivating at least one operational mode of the optical apparatus, wherein the at least one operational mode comprises at least one of: an eye rest mode, a public-transport passenger mode, a driving mode, a work mode.

In this regard, the frame is designed in a manner that the optical element per eye is firmly arranged on the frame, along optical paths of the ambient light reaching their corresponding eyes. In an example, when the optical apparatus is implemented as a pair of eyeglasses, the frame may hold two optical elements, wherein the two optical elements are arranged in front of each eye of the user. It will be appreciated that a material of the frame could be plastic, metal, polymer, and the like. Moreover, the frame may be lightweight, ergonomically designed, and easy to wear.

Optionally, the at least one input means is implemented as one of: a physical slider, a button, an accelerometer. The at least one input means allows the user to conveniently control activation or deactivation of the at least one operational mode, as per the user's preference. In one instance, when the user activates the at least one operational mode of the optical apparatus using the at least one input means, the at least one processor is configured to generate respective drive signals to drive the at least one light-control element as described earlier, without a need to detect the state of the user's eyes. In another instance, when the user deactivates the at least one operational mode of the optical apparatus, the at least one processor generates respective drive signals to drive the at least one light-control element of the optical element per eye. This flexibility of activation or deactivation of the at least one operational mode may, for example, be beneficial in a scenario where the user may require the at least one operational mode of the optical apparatus only for a certain duration of time during a typical day when she/he wants to increase or decrease the amount of ambient light entering the user's eyes through the optical element per eye. Optionally, one or more operational modes of the at least one operational mode could be activated or deactivated at the same time.

When the eye rest mode is activated, the eye-tracking data is processed to determine the state of the user's eyes, and to adjust the amount of the ambient light entering the user's eyes according to the state of the user's eyes. The eye rest mode can be activated for an entire day or days at length. It will be appreciated that the amount of the ambient light entering the user's eyes is adjusted whenever it is detected that the user's eyes have been fully-closed or partially-closed since at least the predefined detection time period. A technical effect of the eye rest mode is that by adjusting the amount of the ambient light entering the user's eyes, the eyes get relaxed due to a reduction of exposure of the ambient light on the eyes. As an example, the user may activate the eye rest mode when she/he may decide to take a short nap. Hence, the eye rest mode may decrease the amount of the ambient light entering passing through the optical element, thereby creating a conducive environment for restful sleep.

The public-transport passenger mode corresponds to the monitoring of the state of the user's eyes when the user is travelling in a vehicle not driven by the user. Herein, when the public-transport passenger mode is activated, the eye-tracking data is processed to determine the state of the user's eyes when travelling, to adjust the amount of the ambient light entering the user's eyes according to the state of the user's eyes. During the public-transport passenger mode, a notification may be generated if it is found that the user's eyes are still closed when her/his destination has arrived. A technical effect of the public-transport passenger mode is that it prevents the user from accidentally sleeping and resultantly missing their stop when it has arrived. As an example, the user may activate the public-transport passenger mode before boarding a bus. Hence, the public-transport passenger mode may prevent the user from accidentally sleeping by allowing the ambient light to pass through the optical element.

The driving mode corresponds to the monitoring of the state of the user's eyes when the user is driving a vehicle. Herein, when the driving mode is activated, the eye-tracking data is processed to determine the state of the user's eyes, when the user is driving the vehicle. Optionally, the activation of the eye rest mode is suppressed when the driving mode is already activated, even when the user has activated both the driving mode and the eye rest mode. A technical effect of the driving mode is that it aids the user in maintaining focus on the road while driving, by adjusting the amount of light passing through the optical element, while wearing the optical apparatus. As an example, the user may activate the driving mode when driving a car. Hence, the driving mode continuously monitors the user's eyes to determine when the user's eyes are closed while driving, and generates a notification (for example, an alarm) to alert the user when the user's eyes have been closed for more than a predefined time period. This is important from a point of view of driving safety.

The work mode corresponds to the monitoring of the state of the user's eyes when the user is working. Herein, when the work mode is activated, the eye-tracking data is processed to determine the state of the user's eyes when working, to adjust the amount of the ambient light entering the user's eyes according to the state of the user's eyes. Optionally, the activation of the eye rest mode is suppressed when the work mode is already activated, even when the user has activated both the work mode and the rest mode. A technical effect of the work mode is that it could be used to detect when the user is feeling drowsy, fatigued, and similar, when working, and prevent the user from losing attention during critical and/or dangerous situations. As an example, the user may activate the work mode when working on heavy machinery. Hence, the work mode prevents the user from taking a nap or falling asleep while working on such heavy machinery. This is also important from a point of view of the user's safety.

Optionally, the optical apparatus further comprises at least one output device, wherein the at least one processor is further configured to:
detect when the state of the user's eyes has been a partially-closed state or a fully-closed state since at least the predefined detection time period; and
when it is detected that the state of the user's eyes has been the partially-closed state or the fully-closed state since at least the predefined detection time period, control the at least one output device to perform at least one of:
   generate a first notification, when the state of the user's eyes does not change to an open state within a first predefined time period from a time instant when it was detected that the state of the user's eyes has been the partially-closed state or the fully-closed state since at least the predefined detection time period;
   generate a second notification, within a second predefined time period from said time instant;
   generate a third notification, when a public-transport passenger mode of the optical apparatus is already activated and a location of the user is determined to lie within a predefined distance from a location of the user's stop;
   generate a fourth notification, when a driving mode of the optical apparatus is already activated at said time instant;
   generate a fifth notification, when a work mode of the optical apparatus is already activated at said time instant.

Herein, the term "*output device*" refers to another communication device which is accessible by the user. The at least one output device is configured to generate a given notification. Herein, the given notification encompasses namely, the first notification, the second notification, the third notification, the fourth notification, and the fifth notification. The given notification could be provided to the user in a textual manner, a graphical manner, an audio manner, a visual manner, a haptic manner, and/or a combination of the aforementioned manners. Examples of the at least one output device may include, but are not limited to, at least one speaker, a vibration actuator, a display device, a cellular phone, a phablet, a tablet, a laptop, and a smart watch. When the at least one output device is the at least one speaker, said at least one speaker could be arranged in a temple on the frame of the optical apparatus.

Optionally, the at least one processor is communicably coupled to at least one external output device, a location of the at least one external output device being different from the location of the user, wherein the at least one processor is further configured to control the at least one external output device to generate a notification when the user is engaged in an attentiveness-based activity and the location of the optical apparatus is determined to be at the location of the attentiveness-based activity, at the time of determining that the state of the user's eyes is the fully-closed state or the partially-closed state. An example of such attentiveness-based activity may be a soldier patrolling a border of a country. Continuing in reference with the aforementioned example, the at least one external output device may be located at a common post at the border. Herein, the work mode of the optical apparatus may be activated, and the at least one processor may be configured to detect a location of the soldier and detect whether the user's eyes are in the open state. When it may be detected that the soldier is at the border, but the user's eyes may be in the fully-closed state or the partially-closed state at the location of the border, at least one of: an alarm, a haptic signal, a visual image, a combination of these may be generated to change the state of the user's eyes to the open state.

In this regard, the state of the user's eyes are detected by the at least one processor when the optical apparatus is in use. Such detection of determining the partially-closed state or the fully-closed state of the user's eyes has already been described earlier. Upon detecting the state of the user's eyes, and when the at least one processor verifies that an actual state of the user's eyes corresponds to the partially-closed state or the fully-closed state, the at least one processor is configured to generate another drive signal and send said drive signal to the at least one output device. The another drive signal could be a voltage signal and/or a current signal. A technical effect of using the at least one output device to generate a given notification is to alert the user whenever it is detected that the user's eyes have been in the fully-closed state or the partially-closed state for more than a predefined time period.

In a first case, the state of the user's eyes may have initially been in the partially-closed state or the fully-closed state since at least the predefined detection time period. In such a case, if it is detected that the state of the user's eyes has not changed to an open state within the first predefined time period (from the time instant when it was initially detected that the state has been in the partially-closed state or the fully-closed state since at least the predefined detection time period), the first notification could be generated. Herein, the predefined detection time period could be less than the first predefined time period. The time instant is a particular point in time since when a given operational mode (for example, the eye rest mode) has been activated. The first predefined time period could lie in a range of 15 minutes to 2 hours. The first predefined time period could be set manually by the user, or could be a pre-configured setting of the optical apparatus. This may potentially be used for setting a power nap timer.

In a second case, the second notification is generated within the second predefined time period from said time instant, when it is detected that the user's eyes continue to be in the fully-closed state or the partially-closed state for the second predefined time period from the aforesaid time instant. The second predefined time period could lie in a range of 5 seconds to 20 minutes. The second predefined time period could be set manually by the user, or could be a pre-configured setting of the optical apparatus. This may be potentially beneficial in a case where the user may have fallen asleep while wearing the optical apparatus; in such a case, the second notification could be generated to alert the user, so that the user could take off the optical apparatus, thereby preventing any damage to the optical apparatus.

In a third case, the third notification is generated, when the public-transport passenger mode of the optical apparatus is already activated and the location of the user is determined to lie within the predefined distance from the location of the user's stop. In this regard, the state of the user's eyes can be monitored when the user is travelling using the public transport as a passenger, to detect when the user is sleeping/resting. Optionally, the optical apparatus further comprises a location sensor, wherein the at least one processor is further configured to process sensor data, captured by the location sensor, to determine the location of the user when the optical apparatus is worn by the user. Additionally or alternatively, information about the location of the user could be received from a user device to which the optical apparatus is communicably coupled. Moreover, Optionally, information about the location of the user's stop could also be received from the user device. The predefined distance could lie in a range of 50 metres to 500 metres. When the user lies within the predefined distance from the location of the user's stop, it means that the user is about to approach the stop, and needs to deboard once the public transport reaches the user's stop. Thus, generating the third notification in such a case is beneficial.

In a fourth case, the fourth notification is generated, when the driving mode of the optical apparatus is already activated at said time instant. In other words, when it is determined that the user is sleeping/resting while driving, the fourth notification is generated. This beneficially prevents any road accidents. Advantageously, the state of the user's eyes can be monitored using the optical apparatus, without a need to install any auxiliary hardware in the user's vehicle.

In a fifth case, the fifth notification is generated, when the work mode of the optical apparatus is already activated at said time instant. This may be particularly beneficial when the user is performing a critical and/or dangerous task. Thus, generating the fifth notification (when it is detected that the user is sleeping/resting in the work mode) prevents any mishaps while working. This could be beneficial for various use case scenarios, for example, such as drowsiness monitoring of a critical personnel, drowsiness monitoring of operators of heavy machinery, drowsiness monitoring of hikers on dangerous trails, drowsiness monitoring of participants attending a virtual meeting, and similar. Examples of such critical personnel include, but are not limited, to security guards, air traffic controllers, surgeons.

Moreover, optionally, one of the first polarizer and the second polarizer is a horizontal polarizer, and wherein the at least one processor is configured to:
process the eye-tracking data to detect an optical depth at which the user is looking; and
switch off the horizontal polarizer, when the detected optical depth is less than a predefined optical depth and the user is driving a vehicle having a head up display and/or when the driving mode of the optical apparatus is already activated.

In this regard, the at least one processor is configured to detect the optical depth based on a convergence of the gaze directions of the user's eyes. Herein, the "*gaze direction*" of a given eye refers to a direction in which the given eye of the user is gazing. The gaze direction may be represented by a gaze vector. Optionally, the at least one processor is configured to determine a distance (i.e., the optical depth) at which the user is looking, when the gaze directions of the user's eyes converge at any portion in the real-world environment. In this regard, the optical depth can be determined, based on an inter-pupillary distance of the user, by using triangulation.

Optionally, the predefined optical depth lies in a range of 100 centimetres to 150 centimetres. When the optical depth is less than the predefined optical depth, that means that the user could be looking at the head up display. Herein, the head up display is used to project a virtual image representing driving information onto a transparent screen (i.e., a windshield) of the vehicle. This helps in minimizing distractions and maintain focus when the user is driving the vehicle. It will be appreciated that when the optical apparatus is in use, and when one of the first polarizer and the second polarizer is the horizontal polarizer, it becomes difficult for the user to see the virtual image representing the driving information on the head up display. This happens because the polarization orientation of light emitted from the head up display has a horizontal polarization orientation, hence the light emitted from the head up display gets blocked by the horizontal polarizer. Optionally, when the driving mode is already activated, then the horizontal polarizer is switched off so that said horizontal polarizer does not interfere with the viewing experience of the user, in case the user wants to see the head up display. A technical effect of controlling the first polarizer and the second polarizer in such a manner is that the head up display is clearly visible to the user when driving and when the driving mode is on, so that the user stays focused on driving the vehicle in a safe manner.

Optionally, the at least one processor is communicably coupled to a user device, wherein the at least one processor is configured to receive, from the user device, an input provided by the user, the input being indicative of at least one of: a command to activate or deactivate a given operational mode of the optical apparatus, information pertaining to a given operational mode that is already activated. Herein, the given operational mode encompasses the eye-rest mode, the public-transport passenger mode, the driving mode, and/or the work mode. The term "*user device*" refers to a communication device which is accessible by the user. Examples of the user device may include, but are not limited to, a laptop, a computer, a tablet, a phablet, a pager, a smartphone, a smartwatch, a smart device. The user device may provide the input automatically to the at least one processor or the user may provide the input manually to the at least one processor using the user device. When the user sends the command to activate or deactivate the given operational mode of the optical apparatus, the at least one processor receives and processes the command. A technical benefit of using the user device in such a manner is that the user can dynamically control the at least one light-control element based on inputs provided by the user, as per the user's requirement.

Optionally, the at least one processor is configured to identify the given operational mode based on the input and generate the respective drive signals to carry out the command as provided by the user. The command could be provided to the user in a verbal manner, in a textual manner, in a Boolean manner, in a haptic manner, and similar. Optionally, when the user provides information pertaining to the given operational mode that is already activated, the at least one processor receives and processes said information. The at least one processor is optionally configured to verify the given operational mode currently activated and compare it with the information provided by the user. This information may include, but are not limited to, a location of the user, a location of the user device, a location of the optical apparatus, coordinates of a predetermined location, a mood, an emotion, an activity, a status. A technical benefit of providing said information as the input is that the given operational mode can function efficiently in an accurate manner.

Optionally, the at least one processor is communicably coupled to a smart device or to a server with which the smart device is communicably coupled, and wherein the at least one processor is further configured to:
generate a control signal for controlling the smart device, based on the state of the user's eyes; and
send the control signal to the smart device or to the server, wherein when the control signal is sent to the server, the server is configured to send the control signal to the smart device.

Herein, the term "*smart device*" refers to an electronic device which incorporates connectivity, computational capabilities and/or intelligent features to enhance functionality. The smart device could be connected to other smart devices or other servers in a wireless manner, for example, such as, using a Bluetooth^{®}, Wi-Fi, and cellular connectivity. Examples of the smart device may include, but are not limited to, a smart switch, a smart lighting device, a smart audio device, a smart television, and a smart air conditioner. Furthermore, the term "*server*" refers to a structure and/or a module that includes programmable and/or non-programmable components configured to store, process, and/or share information of the smart device. Specifically, the server includes any arrangement of physical or virtual computational entities capable of enhancing information to perform various computational tasks by the smart device to which the server is communicably coupled with. Furthermore, it will be appreciated that the server may be a single hardware server and/or a plurality of hardware servers operating in a parallel or distributed architecture. In an example, the server may include components such as memory, at least one other processor, a network adapter and the like, to store, process and/or share information with other computing components, such as the smart device. Optionally, the sever is implemented as a computer program that provides various services (for example, such as a database service) to the smart devices.

A technical effect of generating the control signal for controlling the smart device in such a manner is that the smart device responds in real-time based on a requirement of the user, thereby facilitating interaction between the user and the smart device in a natural, seamless, and an intuitive manner. In this regard, the control signal is the voltage signal and/or the current signal. Optionally, the at least one processor is further configured to receive the control signal from the smart device or the server, or send the control signal to the smart device or the server. In other words, the control signals are bidirectional in nature.

Optionally, the control signal generated by the at least one processor is different for the different states of the user's eyes, which resultantly controls the smart device in different ways based on the different control signals generated. Optionally, the control signal may be generated in such a manner that turning smart device on or off is controlled based on the state of the user's eyes. As an example, when the user's eyes may be in the fully-closed state, the at least one processor may be further configured to generate a particular control signal which may control the smart device in a particular manner. When the user's eyes may be in the partially-closed state, the at least one processor may be further configured to generate another particular signal which may control the smart device in another particular manner. When the user's eyes may be in the open state, the at least one processor may be further configured to generate yet another particular signal which may control the smart device in yet another particular manner. For example, when the user's eyes may be in the fully-closed state, the at least one processor may generate the control signal to turn off the smart device or activate the eye rest mode. Alternatively, when the user's eyes may be in the open state, the at least one processor may generate the control signal to turn on the smart device or deactivate the eye rest mode.

Optionally, the at least one processor is further configured to detect whether a location of the user matches a location of the smart device, wherein the control signal is generated when the location of the optical apparatus matches the location of the smart device. Herein, the location of the smart device could be pre-stored at a memory associated with the at least one processor or could be obtained from the server by the at least one processor. The determination of the location of the user has been described in detail below.

Optionally, the at least one processor is configured to either send the control signal directly to the smart device, or send the control signal indirectly to the smart device through the server. When the control signal is sent to the smart device through the server, the control signal could comprise at least one of: an identification number, a model number, an Internet Protocol (IP) address of the smart device, in order to accurately identify the smart device. Hence, the at least one processor is optionally further configured to process the control signal and identify the smart device based on the at least one of: the identification number, the model number, the Internet Protocol (IP) address. Upon determining which smart device to send the control signal to, communication is established by the server with the smart device using a particular protocol. Examples of the protocol may include, but are not limited to, Internet Protocol (IP), Wireless Access Protocol (WAP), Frame Relay, and Asynchronous Transfer Mode (ATM).

Optionally, the at least one processor is further configured to receive, from the smart device or the server, a notification indicating the optical apparatus to deactivate the eye rest mode (namely, the sleep mode). Such a notification can be generated by the smart device or the server, based on event information. For example, the operational mode of the optical apparatus may be the eye rest mode. There may be a notification regarding a calendar event when the eye rest mode is already activated. Hence, based on the notification, a control signal may be generated to deactivate the eye rest mode.

For example, a device may be arranged in an environment where the optical apparatus is used. The smart device may be at least one of: the smart lighting system, the smart television, the smart air conditioner. When the user's eyes are in the fully-closed state, and when the eye rest mode is activated, a control signal may be generated for turning on the smart lighting system. Furthermore, another control signal may be generated for turning off the smart television and the smart air conditioner. Subsequently, the control signal and the another control signal are sent to the smart device.

Furthermore, optionally, the at least one processor is further configured to:
track changes in the state of the user's eyes;
optionally, track head movements of the user, based on pose-tracking data collected by a pose-tracking means of the optical apparatus;
detect at least one trigger input provided by the user, based on at least one of: a time period that has elapsed from a time instant when it was detected that the state of the user's eyes has been a partially-closed state or a fully-closed state since at least a predefined detection time period, a blink pattern of the user's eyes, an eye movement pattern of the user's eyes, a head movement pattern of the user's head, an accelerometer-based tap performed by the user; and
perform at least one of:
   gather statistical data for further analysis;
   control an if-this-then-that based device or software based on the at least one trigger input provided by the user.

In this regard, the at least one processor is configured to continuously monitor the changes in the state of the user's eye over a period of time. Optionally, an initial state is established when the tracking commences, by detecting the state of the user's eyes at a beginning of tracking the state of the user's eyes. Such changes in the state of the user's eyes can be recorded over said period of time, in a form of graphs, the images, the sensor data. Such changes in the state of the user's eyes could be time-stamped to determine a duration of a particular state. Beneficially, such time-stamping facilitates in analysing, tracking patterns, or performing an action based on the duration of the particular state.

Optionally, the pose-tracking means is communicably coupled to the at least one processor in a wired manner or a wireless manner. Herein, the term "*pose-tracking means*" refers to another specialized equipment that is employed to detect and/or follow a pose of the head of the user. The term "*pose*" encompasses both position and orientation. Optionally, the pose-tracking means is employed to track the head movements of the user when the optical apparatus is worn by the user, when the pose-tracking means is mounted on the frame of the optical apparatus. Thus, in such a case, the pose of the optical apparatus changes according to a change in the pose of the head. Pursuant to embodiments of the present disclosure, the pose-tracking means is implemented as a true six Degrees of Freedom (6DoF) tracking system. In other words, the pose-tracking means tracks both position and orientation of the head within a three-dimensional space of the real-world environment. In particular, said pose-tracking means is configured to track flexion, extension, lateral flexion, rotation, circumduction, nodding, shaking, and similar of the head of the user. The pose-tracking means could be implemented as an internal component of the optical apparatus, as a tracking system external to the optical apparatus, or a combination thereof. The pose-tracking means could be implemented as at least one of: an optics-based tracking system (which utilizes, for example, infrared beacons and detectors, infrared cameras, visible-light cameras, detectable objects and detectors, and the like), an acoustics-based tracking system, a radio-based tracking system, a magnetism-based tracking system, an accelerometer, and a gyroscope.

Subsequently, the at least one trigger input is provided by the user using the at least one input means or by providing the at least one trigger input using the user device. Such at least one trigger input can be provided manually by the user, or automatically based on a criteria, or a combination thereof. Herein, the criteria encompasses at least one of: the time period that has elapsed from the time instant when it was detected that the state of the user's eyes has been the partially-closed state or the fully-closed state since at least the predefined detection time period, the blink pattern of the user's eyes, the eye movement pattern of the user's eyes, the head movement pattern of the user's head, the accelerometer-based tap performed by the user.

In a first case, the at least one processor is configured to monitor the time duration after detecting that the user's eyes are in the fully-closed state or the partially-closed state longer than the predefined detection time period. When it is determined that the user's eyes are still in the fully-closed state or the partially-closed state for the time period, the at least one processor is configured to detect said state to be at least one trigger input. In a second case, the at least one processor is configured to monitor and analyse the blink pattern of the user's eyes. Herein, at least one of: a frequency, another time duration, a sequence of the blinks could be monitored by the at least one processor. When a particular blink pattern of the user's eyes corresponds to a predefined blink pattern, the at least one processor is configured to detect the particular blink pattern to be the at least one trigger input. Such predefined blink pattern may be related to an eye condition, for example, such as Blepharospasm, Hemifacial Spasm, Tourette Syndrome, and the like. In a third case, the at least one processor is configured to follow or track a movement of the user's eyes, such as the gaze direction per eye, or particular eye movements, using the eye-tracking means. When the gaze direction or the particular eye movement corresponds to a predefined gaze direction or a predefined eye movement, respectively, the at least one processor is configured to detect the gaze direction or the particular eye movement to be the at least one trigger input. In a fourth case, the at least one processor is configured to monitor the movement of the head of the user, for example, as described earlier in detail. When a particular head movement corresponds to a predefined head movement, the at least one processor is configured to detect the particular head movement to be the at least one trigger input. In a fifth case, the at least one processor is configured to receive sensor data from the accelerometer, as described earlier, wherein the sensor data corresponds to taps detected, or movements of the user. When a particular value in the sensor data corresponds to a predefined value, the at least one processor is configured to detect the particular value to be at least one trigger input.

Subsequently, when the at least one trigger input is detected by the at least one processor, information procured when detecting the at least one trigger input is collected. This information could be stored in a data repository. The term "*data repository*" refers to hardware, software, firmware, or a combination of these for storing the information in an organized (namely, structured) manner, thereby, allowing for easy storage, access (namely, retrieval), updating and analysis of the given information. The data repository may be implemented as a memory of the optical apparatus, a removable memory, a cloud-based database, or similar. The data repository can be implemented as one or more storage devices. Subsequently, statistical analysis techniques may be applied on the information to extract insights. Examples of such statistical analysis techniques may include, but are not limited to, mean, median, mode, and correlation. The statistical data may be in a form of a graph, a chart, a table, and the like. An exemplary use case scenario may be monitoring a patient after surgery in a recovery room. The statistical data may include time instants when the patient wakes up and a time duration for which the state of the user's eyes are in the fully-closed state or the partially-closed state. An insight that may be extracted from the statistical data may be an estimation of a speed of recovery of the patient. A technical benefit of gathering the statistical data in such a manner is that a progress of the user can be determined and visually displayed to the user.

Optionally, the if-this-then-that (IFTTT) based device or software is communicably coupled with the at least one processor. The "*if-this-then-that based device*" or the "*if-this-then-that based software*" is a device or a software, respectively, that enables the user to create a workflow or an automated action by defining conditional statements. The IFTTT based device or software enables the at least one processor to couple to different services, platforms, smart devices, or a combination thereof, to create a utility program. This utility program triggers actions based on the at least one trigger input. In this regard, the 'if-this' part of the IFTTT based device or software refers to the at least one trigger input. The '*then-that*' part of the IFTTT based device or software refers to the action that is to be performed when the at least one trigger input is detected. The action may include at least one of: generating an alarm, sending an email, notifying emergency contacts of the user, send an alarm to a nurse or a doctor, and the like. As an example, a virtual-assistant-based device can be activated and controlled based on the at least one trigger input provided by the user. As another example, a noise cancellation mode of an audio headset can be activated based on the at least one trigger input provided by the user.

The present disclosure also relates to the second aspect as described above. Various embodiments and variants disclosed above, with respect to the aforementioned first aspect, apply *mutatis mutandis* to the second aspect.

Optionally, the method comprises:
detecting when the state of the user's eyes has been a partially-closed state or a fully-closed state since at least a predefined detection time period; and
when it is detected that the state of the user's eyes has been the partially-closed state or the fully-closed state since at least the predefined detection time period, controlling the at least one light-control element to decrease the amount of the ambient light passing through the optical element towards the user's eyes.

Optionally, the step of processing the eye-tracking data comprises:
identifying at least one indicator of the state of the user's eyes, wherein the at least one indicator comprises at least one of: an extent of visibility of pupils of the user's eyes, a position of the user's eyelids with respect to corners of a user's eyes, a velocity with which the user's gaze is moving, an acceleration with which the user's gaze is moving, a time period since a last blink of the user's eyes; and
determining the state of the user's eyes, based on the at least one indicator.

Optionally, the method comprises receiving an input provided by the user, the input being indicative of at least one of: a command to activate or deactivate a given operational mode of the optical apparatus, information pertaining to a given operational mode that is already activated.

Optionally, the method further comprises:
generating a control signal for controlling a smart device, based on the state of the user's eyes; and
sending the control signal to the smart device or to or a server with which the smart device is communicably coupled, wherein when the control signal is sent to the server, the server is configured to send the control signal to the smart device.

Optionally, the method further comprises:
detecting when the state of the user's eyes has been a partially-closed state or a fully-closed state since at least a predefined detection time period; and
when it is detected that the state of the user's eyes has been the partially-closed state or the fully-closed state since at least the predefined detection time period, controlling at least one output device to perform at least one of:
   generating a first notification, when the state of the user's eyes does not change to an open state within a first predefined time period from a time instant when it was detected that the state of the user's eyes has been the partially-closed state or the fully-closed state since at least the predefined detection time period;
   generating a second notification, within a second predefined time period from said time instant;
   generating a third notification, when a public-transport passenger mode of the optical apparatus is already activated and a location of the user is determined to lie within a predefined distance from a location of the user's stop;
   generating a fourth notification, when a driving mode of the optical apparatus is already activated at said time instant;
   generating a fifth notification, when a work mode of the optical apparatus is already activated at said time instant.

Optionally, the method further comprises:
tracking changes in the state of the user's eyes;
optionally, tracking head movements of the user, based on pose-tracking data collected by a pose-tracking means of the optical apparatus;
detecting at least one trigger input provided by the user, based on at least one of: a time period that has elapsed from a time instant when it was detected that the state of the user's eyes has been a partially-closed state or a fully-closed state since at least a predefined detection time period, a blink pattern of the user's eyes, an eye movement pattern of the user's eyes, a head movement pattern of the user's head, an accelerometer-based tap performed by the user; and
performing at least one of:
   gathering statistical data for further analysis;
   controlling an if-this-then-that based device or software based on based on the at least one trigger input provided by the user.

### DETAILED DESCRIPTION OF THE DRAWINGS

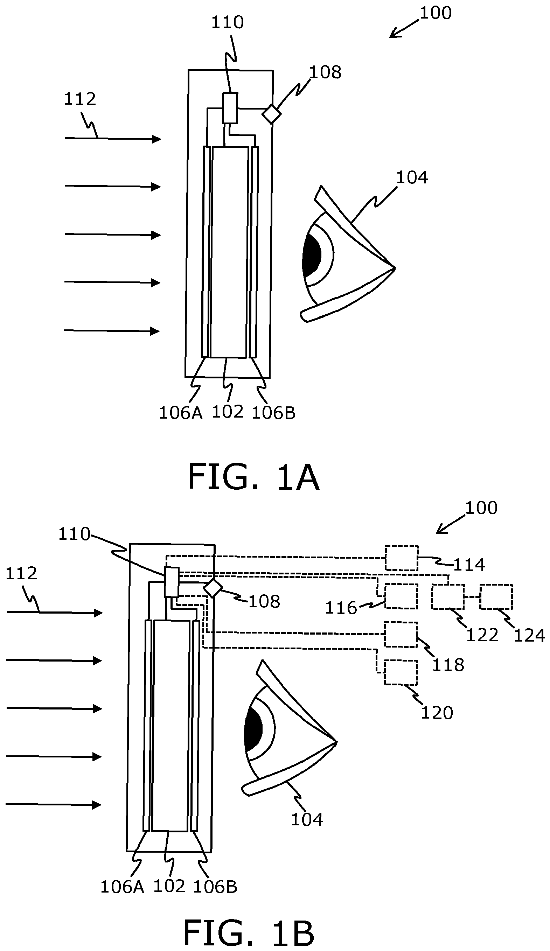

Referring to FIGs. 1A and 1B, illustrated are schematic diagrams of an optical apparatus **100**, according to different embodiments of the present disclosure. In FIGs. 1A and 1B, the optical apparatus **100** comprises an optical element **102** per eye **104**, at least one light-control element (depicted as light-control elements **106A** and **106B**) per eye **104**, an eye-tracking means **108**, and at least one processor (depicted as a processor **110**). The light-control elements **106A** and **106B** can be arranged on either side of the optical element **102**, wherein when activated, the light-control elements **106A-B** allow light of at least one type to pass therethrough. The processor **110** is communicably coupled with the light-control elements **106A** and **106B**, and the eye-tracking means **108.** The processor **110** is configured to process eye-tracking data, collected by the eye-tracking means **108**, to determine a state of a user's eyes; and control the light-control elements **106A-B** to adjust an amount of ambient light **112** passing through the optical element **102** towards the eye **104**, based on the state of the eye **104.**

With reference to FIG. 1B, optionally, the optical apparatus **100** further comprises one or more of: a user device **114**, a smart device **116**, at least one output device (depicted as an output device **118**), a pose-tracking means **120.** In this regard, the processor **110** is communicably coupled with the one or more of: the user device **114**, the smart device **116**, the output device **118**, the pose-tracking means **120**, and is configured to perform various operations described earlier. Optionally, the optical apparatus **100** further comprises a server **122** which is communicably coupled with another smart device **124.** In such a case, the processor **110** is communicably coupled with the server **122**.

FIGs. 1A and 1B are merely examples, which should not unduly limit the scope of the claims herein. A person skilled in the art will recognize many variations, alternatives, and modifications of embodiments of the present disclosure. As an example, the eye-tracking means **108** could be implemented as separate eye-tracking means per eye. As another example, there could be just one light-control element per eye.

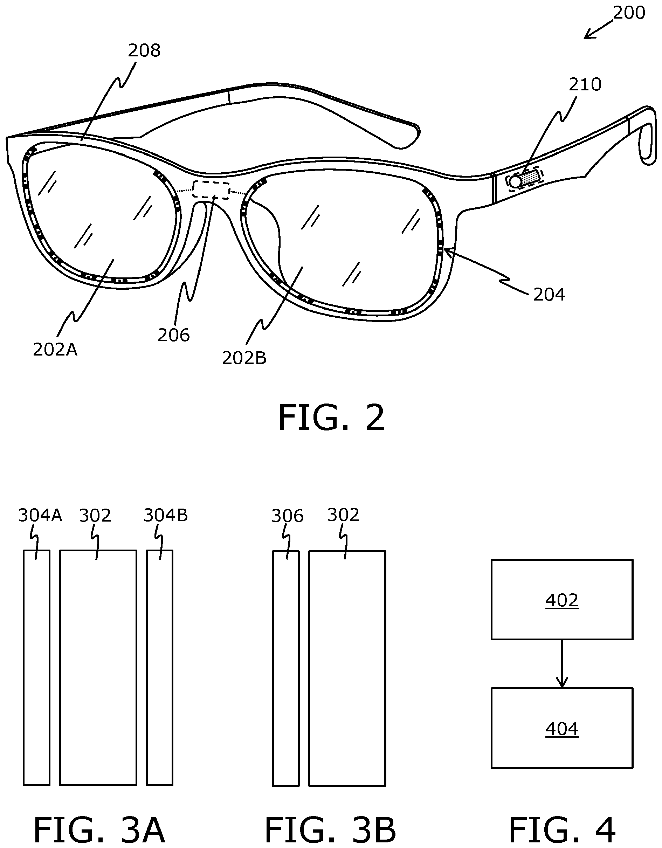

Referring to FIG. 2, illustrated is an optical apparatus **200**, in accordance with an embodiment of the present disclosure. As shown, the optical apparatus **200** is implemented as a pair of eyeglasses. The optical apparatus **200** comprises an optical element per eye (depicted as an optical element **202A** for a right eye and an optical element **202B** for a left eye), at least one light-control element per eye (not shown), an eye-tracking means **204**, at least one processor (depicted as a processor **206**), a frame **208** employed for holding the optical element **202A** for the right eye and the optical element **202B** for the left eye, and at least one input means (depicted as an input means **210**) mounted on the frame **208.** The input means **210** could be implemented, for example, as a physical slider. The light-control element is arranged on at least one side of the optical elements **202A-B**, wherein when activated, the light-control elements allows light of at least one type to pass therethrough. The processor **206** is communicably coupled with the light-control elements and the eye-tracking means **204.**

FIG. 2 is merely an example, which should not unduly limit the scope of claims therein. It is to be understood that the specific implementation of the optical apparatus **200** is provided as an example and is not to be construed as limiting it to specific numbers or types of optical elements, components of the eye-tracking means, and input means. A person skilled in the art will recognize many variations, alternatives, and modifications of embodiments of the present disclosure.

Referring to FIGs. 3A and 3B, there are shown schematic illustrations of implementations of at least one light-control element of an optical apparatus, in accordance with different embodiments of the present disclosure. In both FIGs. 3A and 3B, the at least one light-control element is arranged on at least one side of an optical element **302.** In FIG. 3A, the at least one light-control element is implemented as a first polarizer **304A** and a second polarizer **304B.** The first polarizer **304A** and the second polarizer **304B** are shown to be arranged, for example, on different sides of the optical element **302**, but could also be arranged on a same side of the optical element **302.** In FIG. 3B, the at least one light-control element is implemented as an electrochromic element **306.** The electrochromic element **306** is arranged on one side of the optical element **302.**

FIGs. 3A and 3B are merely examples, which should not unduly limit the scope of the claims herein. A person skilled in the art will recognize many variations, alternatives, and modifications of embodiments of the present disclosure.

Referring to FIG. 4, illustrated is a flowchart illustrating steps of a method incorporating adaptive adjustment in an optical apparatus according to eye state, in accordance with an embodiment of the present disclosure. At step **402,** eye-tracking data, collected by an eye-tracking means, is processed to determine a state of a user's eyes. At step **404**, at least one light-control element is controlled to adjust an amount of ambient light passing through an optical element towards the user's eyes, based on the state of the user's eyes, wherein the at least one light-control element is arranged on at least one side of the optical element.

## Claims

1. An optical apparatus (100, 200) comprising:
an optical element (102, 202A-B, 302) per eye (104);
at least one light-control element (106A-B) per eye, arranged on at least one side of the optical element, wherein when activated, the at least one light-control element allows light of at least one type to pass therethrough;
an eye-tracking means (108, 204); and
at least one processor (110, 206) configured to:
process eye-tracking data, collected by the eye-tracking means, to determine a state of a user's eyes; and
control the at least one light-control element to adjust an amount of ambient light (112) passing through the optical element towards the user's eyes, based on the state of the user's eyes.

2. The optical apparatus (100, 200) of claim 1, wherein the at least one light-control element (106A-B) is implemented as at least a first polarizer (304A) and a second polarizer (304B).

3. The optical apparatus (100, 200) of claim 2, wherein one of the first polarizer (304A) and the second polarizer (304B) is a horizontal polarizer, and wherein the at least one processor (110, 206) is configured to:
process the eye-tracking data to detect an optical depth at which the user is looking; and
switch off the horizontal polarizer, when the detected optical depth is less than a predefined optical depth and the user is driving a vehicle having a head up display and/or when a driving mode of the optical apparatus is already activated.

4. The optical apparatus (100, 200) of claim 1, wherein the at least one light-control element (106A-B) is implemented as an electrochromic element (306).

5. The optical apparatus (100, 200) of any of the preceding claims, wherein the at least one processor (110, 206) is configured to:
detect when the state of the user's eyes (104) has been a partially-closed state or a fully-closed state since at least a predefined detection time period; and
when it is detected that the state of the user's eyes has been the partially-closed state or the fully-closed state since at least the predefined detection time period, control the at least one light-control element (106A-B) to decrease the amount of the ambient light (112) passing through the optical element (102, 202A-B, 302) towards the user's eyes.

6. The optical apparatus (100,200) of claim 5, wherein the amount of the ambient light (112) passing through the optical element (102, 202A-B, 302) towards the user's eyes (104) is decreased over a predefined time period.

7. The optical apparatus (100, 200) of any of the preceding claims, wherein when processing the eye-tracking data, the at least one processor (110, 206) is configured to:
identify at least one indicator of the state of the user's eyes (104), wherein the at least one indicator comprises at least one of: an extent of visibility of pupils of the user's eyes, a position of the user's eyelids with respect to corners of a user's eyes, a velocity with which the user's gaze is moving, an acceleration with which the user's gaze is moving, a time period since a last blink of the user's eyes; and
determine the state of the user's eyes, based on the at least one indicator.

8. The optical apparatus (100, 200) of any of the preceding claims, further comprising:
a frame (208) employed to hold the optical element (102, 202A-B, 302) per eye (104); and
at least one input means (210), mounted on the frame, that is to be used by the user for activating or deactivating at least one operational mode of the optical apparatus, wherein the at least one operational mode comprises at least one of: an eye rest mode, a public-transport passenger mode, a driving mode, a work mode.

9. The optical apparatus (100, 200) of any of the preceding claims, wherein the at least one processor (110, 206) is communicably coupled to a user device (114), wherein the at least one processor is configured to receive, from the user device, an input provided by the user, the input being indicative of at least one of: a command to activate or deactivate a given operational mode of the optical apparatus, information pertaining to a given operational mode that is already activated.

10. The optical apparatus (100, 200) of any of the preceding claims, wherein the at least one processor (110, 206) is communicably coupled to a smart device (116, 124) or to a server (122) with which the smart device is communicably coupled, and wherein the at least one processor is further configured to:
generate a control signal for controlling the smart device, based on the state of the user's eyes (104); and
send the control signal to the smart device or to the server, wherein when the control signal is sent to the server, the server is configured to send the control signal to the smart device.

11. The optical apparatus (100, 200) of any of the preceding claims, further comprising at least one output device (118), wherein the at least one processor (110, 206) is further configured to:
detect when the state of the user's eyes (104) has been a partially-closed state or a fully-closed state since at least a predefined detection time period; and
when it is detected that the state of the user's eyes has been the partially-closed state or the fully-closed state since at least the predefined detection time period, control the at least one output device to perform at least one of:
generate a first notification, when the state of the user's eyes does not change to an open state within a first predefined time period from a time instant when it was detected that the state of the user's eyes has been the partially-closed state or the fully-closed state since at least the predefined detection time period;
generate a second notification, within a second predefined time period from said time instant;
generate a third notification, when a public-transport passenger mode of the optical apparatus is already activated and a location of the user is determined to lie within a predefined distance from a location of the user's stop;
generate a fourth notification, when a driving mode of the optical apparatus is already activated at said time instant;
generate a fifth notification, when a work mode of the optical apparatus is already activated at said time instant.

12. The optical apparatus (100, 200) of any of the preceding claims, wherein the at least one processor (110, 206) is further configured to:
track changes in the state of the user's eyes (104);
optionally, track head movements of the user, based on pose-tracking data collected by a pose-tracking means (120) of the optical apparatus;
detect at least one trigger input provided by the user, based on at least one of: a time period that has elapsed from a time instant when it was detected that the state of the user's eyes has been a partially-closed state or a fully-closed state since at least a predefined detection time period, a blink pattern of the user's eyes, an eye movement pattern of the user's eyes, a head movement pattern of the user's head, an accelerometer-based tap performed by the user; and
perform at least one of:
gather statistical data for further analysis;
control an if-this-then-that based device or software based on the at least one trigger input provided by the user.

13. A method implemented by an optical apparatus (100, 200) comprising an optical element (102, 202A-B, 302) per eye (104), at least one light-control element (106A-B) per eye, arranged on at least one side of the optical element, an eye-tracking means (108, 204), and at least one processor (110, 206), wherein the method comprises:
processing eye-tracking data, collected by the eye-tracking means, to determine a state of a user's eyes; and
controlling the at least one light-control element (106A-B) to adjust an amount of ambient light (112) passing through the optical element towards the user's eyes, based on the state of the user's eyes, wherein the at least one light-control element allows light of at least one type to pass therethrough.

14. The method of claim 13, wherein the method comprises:
detecting when the state of the user's eyes (104) has been a partially-closed state or a fully-closed state since at least a predefined detection time period; and
when it is detected that the state of the user's eyes has been the partially-closed state or the fully-closed state since at least the predefined detection time period, controlling the at least one light-control element (106A-B) to decrease the amount of the ambient light (112) passing through the optical element (102, 202A-B, 302) towards the user's eyes.

15. The method of any of claims 13-14, wherein the step of processing the eye-tracking data comprises:
identifying at least one indicator of the state of the user's eyes (104), wherein the at least one indicator comprises at least one of: an extent of visibility of pupils of the user's eyes, a position of the user's eyelids with respect to corners of a user's eyes, a velocity with which the user's gaze is moving, an acceleration with which the user's gaze is moving, a time period since a last blink of the user's eyes; and
determining the state of the user's eyes, based on the at least one indicator.

16. The method of any of claims 13-15, wherein the method comprises receiving an input provided by the user, the input being indicative of at least one of: a command to activate or deactivate a given operational mode of the optical apparatus (100, 200), information pertaining to a given operational mode that is already activated.

17. The method of any of claims 13-16, wherein the method further comprises:
generating a control signal for controlling a smart device (116, 124), based on the state of the user's eyes (104); and
sending the control signal to the smart device or to or a server (122) with which the smart device is communicably coupled, wherein when the control signal is sent to the server, the server is configured to send the control signal to the smart device.

18. The method of any of claims 13-17, wherein the method further comprises:
detecting when the state of the user's eyes (104) has been a partially-closed state or a fully-closed state since at least a predefined detection time period; and
when it is detected that the state of the user's eyes has been the partially-closed state or the fully-closed state since at least the predefined detection time period, controlling at least one output device (118) to perform at least one of:
generating a first notification, when the state of the user's eyes does not change to an open state within a first predefined time period from a time instant when it was detected that the state of the user's eyes has been the partially-closed state or the fully-closed state since at least the predefined detection time period;
generating a second notification, within a second predefined time period from said time instant;
generating a third notification, when a public-transport passenger mode of the optical apparatus (100, 200) is already activated and a location of the user is determined to lie within a predefined distance from a location of the user's stop;
generating a fourth notification, when a driving mode of the optical apparatus is already activated at said time instant;
generating a fifth notification, when a work mode of the optical apparatus is already activated at said time instant.

19. The method of any of claims 13-18, wherein the method further comprises:
tracking changes in the state of the user's eyes (104);
optionally, tracking head movements of the user, based on pose-tracking data collected by a pose-tracking means (120) of the optical apparatus (100, 200);
detecting at least one trigger input provided by the user, based on at least one of: a time period that has elapsed from a time instant when it was detected that the state of the user's eyes has been a partially-closed state or a fully-closed state since at least a predefined detection time period, a blink pattern of the user's eyes, an eye movement pattern of the user's eyes, a head movement pattern of the user's head, an accelerometer-based tap performed by the user; and
performing at least one of:
gathering statistical data for further analysis;
controlling an if-this-then-that based device or software based on based on the at least one trigger input provided by the user.
